# EUROPÄISCHE PATENTANMELDUNG

(11) **EP 3 851 195 A1**
(43) Veröffentlichungstag der Anmeldung: **21.07.2021**
(21) Anmeldenummer: 20151718.2
(22) Anmeldetag: 14.01.2020
(51) Int. Cl.: B02C 15/00

(54) **WÄLZMÜHLE MIT GESCHRÄNKTEN MAHLWALZEN**

(71) Anmelder: Gebr. Pfeiffer SE, 67655 Kaiserslautern (DE)
(72) Erfinder: ALVE, Johannes, 67691 Hochspeyer (DE); HANAUER, Saskia, 67316 Carlsberg (DE); HOFFMANN, Dirk, 67705 Trippstadt (DE)
(74) Vertreter: Grünecker Patent- und Rechtsanwälte PartG mbB

(57) **Zusammenfassung**

Dier Erfindung betrifft eine Wälzmühle 1, mit einem Mahlteller 2 und Mahlwalzen 3, wobei der Mahlteller 2 relativ zu den Mahlwalzen um eine Mittelachse 100 des Mahltellers 2 in einer Mahltellerdrehrichtung 200 drehbar ist, sodass die Mahlwalzen 3 auf einer Mahlbahn 9 des Mahltellers 2 um eine Walzendrehachse 300 abrollen. Wenigstens eine der Mahlwalzen 3 ist um einen Schränkwinkel 500 in Richtung der Mahltellerdrehrichtung 200 verdreht, sodass die Walzendrehachse 300 in einem radialen Abstand 600 von der Mittelachse 100 des Mahltellers 2 verläuft. Der Schränkwinkel 500 ist zwischen 1 Grad und 4,5 Grad. Die Erfindung betrifft weiterhin ein Verfahren zum Betreiben einer Wälzmühle 1 und die Verwendung einer Wälzmühle 1 zum Zerkleinern von partikelförmigen Schüttgut.

## Beschreibung

Die vorliegende Erfindung betrifft eine Wälzmühle, ein Verfahren zum Betreiben einer Wälzmühle und die Verwendung einer Wälzmühle zum Zerkleinern von partikelförmigem Schüttgut.

Im Stand der Technik sind Wälzmühlen mit einem Mahlteller und Mahlwalzen bekannt, wobei die Mahlwalzen um einen Schränkwinkel verdreht sein können. So ist es aus der EP 2 252 403 B1 bekannt, beim Deaktivieren von einem von mehreren Antrieben eines Mahltellers eine oder mehrere Mahlwalzen außer Eingriff mit dem Mahlteller zu bringen, und zur weiteren Reduzierung der Radialkraft die verbleibenden Mahlwalzen zu schränken. Insbesondere wird im Stand der Technik gelehrt, Walzen entgegen der Drehrichtung des Mahltellers zu schränken, beispielsweise in der US 1,661,297 oder der DE 32 40 931 A1.

Weiterhin werden im Stand der Technik oft recht große Schränkwinkel gelehrt, beispielsweise in der DE 10 2007 009 723 A1, der DE 10 2008 039 541 A1 oder der CN 105 080 665 A. Die JP 11 156 220 A offenbart einen Schränkwinkelbereich von 3 Grad entgegen der Mahlteller-Drehrichtung bis 0,7 Grad in Richtung der Mahlteller-Drehrichtung. Dabei wird erläutert, dass bei Schränkwinkeln entgegen der Mahlteller-Drehrichtung über 3 Grad das Motordrehmoment zu hoch würde. Von Schränkwinkeln über 0,7 Grad in Mahlteller-Drehrichtung wird abgeraten, da dann Vibrationen erwartet werden.

Es ist die Aufgabe der vorliegenden Erfindung, eine Wälzmühle, sowie ein Verfahren und eine Verwendung zum Betrieb von Wälzmühlen bereitzustellen, die ein gleichmäßigeres Mahlergebnis und eine erhöhte Mahlleistung ermöglichen, ohne den Verschleiß wesentlich zu erhöhen.

Die Erfindung stellt eine Wälzmühle mit einem Mahlteller und Mahlwalzen bereit, wobei der Mahlteller relativ zu den Mahlwalzen um eine Mittelachse des Mahltellers in einer Mahlteller-Drehrichtung drehbar ist, so dass die Mahlwalzen auf einer Mahlbahn des Mahltellers um eine Walzendrehachse abrollen. Wenigstens eine der Mahlwalzen ist um einen Schränkwinkel in Richtung der Mahlteller-Drehrichtung verdreht, so dass die Walzendrehachse in einem radialen Abstand von der Mittelachse des Mahltellers verläuft. Der Schränkwinkel liegt erfindungsgemäß zwischen einem 1 Grad und 4,5 Grad.

In einer bevorzugten Ausführungsformen liegt der Schränkwinkel zwischen 1 Grad und 3 Grad, zwischen 1 Grad und 2 Grad, zwischen 2 Grad und 3 Grad, zwischen 2,5 Grad und 3,5 Grad oder zwischen 3 Grad und 4,5 Grad. Schränkwinkel über 4,5 Grad können zu einem unnötig hohen Antriebsmoment des wenigstens einen Antriebs des Mahltellers führen, ohne das Mahlergebnis zu verbessern.

Die Wälzmühle ist insbesondere ausgelegt, Mahlgut in Form von partikelförmigen Schüttgut zu mahlen. Bei dem partikelförmigen Schüttgut handelt es sich insbesondere um gemahlenes Gesteinsmaterial, beispielsweise um Kalkstein, Gips, Kohle oder Tonstein, mineralisches Schüttgut, beispielsweise Zement oder Zementrohmaterial, oder recyceltes Schüttgut, beispielsweise recyceltes Gipsbetonplattenmaterial, Hochofenschlacke, Rauchgasentschwefelungsgips oder Flugasche.

Ein Schränkwinkel im erfindungsgemäßen Bereich zur Verdrehung der Mahlwalze in Richtung der Mahlteller-Drehrichtung erhöht die Scherkräfte zwischen der Mahlwalze und dem Mahlteller, da nun zusätzlich auch Relativgeschwindigkeiten, d.h. Schlupf, zwischen der Mahlwalze und dem Mahlteller in Radialrichtung auftreten. Diese Scherkräfte erzeugen zusätzliche Reibung, wodurch wiederum Dämpfung erzeugt wird und dadurch Vibrationen reduziert werden. Dies ermöglicht die Ausbildung einer gleichmäßigen Mahlbettdicke, wobei insbesondere verhindert wird, dass das Mahlbett bereichsweise zu dünn wird. Damit kann auch der Verschleiß der Mahlwalzen und des Mahltellers reduziert werden. Die erfindungsgemäße Schränkung ermöglicht, dass die Wälzmühle gleichmäßiger läuft, also insbesondere weniger fluktuierende Normalkräfte zwischen Mahlteller und Mahlwalzen wirken, wodurch ein gleichmäßigerer und effizienterer Mahlvorgang ermöglicht wird. Die Normalkraft ist die Kraft, die in Normalrichtung der Oberfläche der Mahlbahn von der Mahlwalze auf den Mahlteller wirkt.

Mahlgut wird in der Wälzmühle zerkleinert, kann aber durch den Mahldruck wieder zu Agglomeraten verpresst werden, die dann aufgrund ihrer Größe im Sichter wieder dem Mahlvorgang bzw. zum Mahlteller rückgeführt werden. Durch die zusätzlichen Scherkräfte aufgrund der Schränkung kann die Bildung von Agglomeraten vermieden werden. Die Scherkräfte brechen größere Bestandteile im Mahlgut, insbesondere Agglomerate und/oder Schülpen, auf, so dass deren Einzelpartikel schneller ded Mahlbereich über den Sichter verlassen. Insbesondere bewirkt die Schränkung, dass Scherkräfte in die radial innere Richtung des Mahltellers wirken. Damit kann ein gründlicherer Mahlvorgang erreicht werden.

Die gemahlenen Partikel werden radial außerhalb des Mahltellers von einem Luftstrom erfasst und zu einem Sichter geführt. Im Sichter wird Feingut, das bereits die gewünschte Partikelgröße erreicht hat, abgetrennt und abgeführt und Grobgut, das einer erneuten Übermahlung bedarf, zurück auf den Mahlteller geführt. Allerdings werden auch Agglomerate aufgrund ihrer Größe zurück auf den Mahlteller geführt. Durch das erfindungsgemäße Schränken kann die Entstehung von Agglomeraten zumindest reduziert werden, und ein weiteres Übermahlen vermieden werden. Insgesamt steigt somit die Mahleffizienz.

Insbesondere ist die Wälzmühle so ausgelegt, dass der Mahlteller relativ zu den Mahlwalzen lediglich in der Mahlteller-Drehrichtung antreibbar ist. Dies kann beispielsweise durch ein Antriebsgetriebe bedingt sein, das lediglich für den Betrieb in der Mahlteller-Drehrichtung ausgelegt ist. Alternativ oder zusätzlich ist eine elektronische Steuerung vorgesehen, die eingerichtet ist, den wenigstens einen Antrieb des Mahltellers lediglich so anzusteuern, dass der Mahlteller in Mahlteller-Drehrichtung dreht. Dadurch kann verhindert werden, dass die Wälzmühle entgegen der vorgesehenen Mahlteller-Drehrichtung betrieben wird, was negative Auswirkungen auf das Mahlergebnis hätte.

In einer Ausführungsform ist die Mahlwalze im Kontaktbereich mit der Mahlbahn zylindrisch geformt. Insbesondere ist die Mahlbahn dann entsprechend eben geformt. Durch die zylindrische Form kann insbesondere erreicht werden, dass Scherkräfte in Umfangsrichtung des Mahltellers zwischen dem Mahlteller und der Mahlwalze erzeugt werden. Weiterhin ist der ebene Mahlbereich zwischen einer zylindrischen Mahlwalze und der ebenen Mahlbahn vorteilhaft hinsichtlich des Transports des Mahlguts auf dem Mahlteller. Insbesondere kann die zylindrische Form der Mahlwalze eine konstante Schlupfgeschwindigkeit in Querrichtung der Mahlwalze ermöglichen.

Vorteilhafterweise ist die Mahlwalze wenigstens im Bereich von 70 %, vorteilhafterweise 80 %, noch vorteilhafterweise 90 %, ihrer Erstreckung in Axialrichtung zylindrisch ausgeformt und lediglich in ihren axialen Randbereichen ggf. mit Abrundungen versehen.

Das Verhältnis von Durchmesser der Mahlwalze zu Breite der Mahlwalze beträgt vorteilhafterweise 1,5 bis 6, in bevorzugten Ausführungsformen kann das Verhältnis 2 bis 5, 3 bis 5, 3,5 bis 5, oder 2 bis 4 betragen, in noch bevorzugteren Ausführungsformen 3 bis 4. Die Mahlwalze weist also hinsichtlich ihrer Breite einen recht großen Durchmesser auf, es handelt sich also um eine vergleichbar schmale Mahlwalze. Dadurch kann insbesondere ein hoher lokaler Mahldruck bzw. eine hohe spezifische Flächenpressung aufgebracht werden, wohingegen das Entstehen von Vibrationen oder ein zu hohes Antriebsmoment vermieden werden kann.

In bevorzugten Ausführungsformen liegt das Verhältnis zwischen dem radialen Abstand von der Mittelachse des Mahltellers zur axialen Mitte der Mahlwalze und der Breite der Mahlwalze zwischen 1,5 und 6. In anderen Ausführungsformen kann dieses Verhältnis auch zwischen 1,5 und 5 liegen. In weiter bevorzugten Ausführungsformen liegt das Verhältnis zwischen 1,75 und 5 oder 3,5 und 5. Diese Verhältnisse ermöglichen insbesondere relativ kleine Mahlwalzen bezüglich recht großen Mahltellerdurchmessern, die in Kombination mit der erfindungsgemäßen Schränkung ein vorteilhaftes Mahlergebnis bereitstellen können, ohne dass Vibrationen ansteigen. Insbesondere kann der spezifische Arbeitsbedarf, d.h. Antriebsenergie (kWh) pro Masse (kg), reduziert werden. Dies liegt unter Anderem daran, dass Energieeinsatz für das Aufbrechen von Agglomeraten, für unnötiges Übermahlen, für elastische Verformung und/oder für Vibrationen vermieden werden kann.

Bevorzugt liegt das Verhältnis zwischen dem radialen Abstand von der Mittelachse des Mahltellers zur axialen Mitte der Mahlwalze und dem Durchmesser der Mahlwalze zwischen 0,5 und 1,5. In anderen Ausführungsformen kann dieses Verhältnis auch zwischen 0,6 und 1,3 liegen.

Vorteilhafterweise wird die Mahlbahn durch einen ebenen Bereich des Mahltellers gebildet, insbesondere sind auch die radial innen und radial außen an die Mahlbahn angrenzenden Bereiche des Mahltellers eben. Insbesondere kann der gesamte Mahlteller eben ausgeführt sein. Durch den ebenen Bereich kann eine vorteilhafter Transport des Mahlguts durch den Mahlspalt zwischen Mahlwalze und Mahlteller erfolgen. Insbesondere kann ein vorteilhafter Transport von Mahlgut in Richtung des Inneren des Mahltellers erreicht werden durch Kombination mit den erfindungsgemäßen Schränkwinkeln.

In einer Ausführungsform ist die Mahlwalze um einen axial mittleren Aufstandspunkt auf der Mahlbahn verdrehbar. Dies hat den Vorteil, dass eine Schränkung erreicht werden kann, ohne dass der Aufstandspunkt der Mahlwalze geändert werden muss. Dadurch bleibt die Einleitung der Normalkraft zwischen Mahlwalze und Mahlteller am gleichen Ort, was vorteilhaft hinsichtlich der Lagerung des Mahltellers sein kann. Alternativ ist es aber auch möglich, die Mahlwalze in eine von der Radialrichtung des Mahltellers abweichenden Richtung linear zu verschieben, insbesondere in eine orthogonale Richtung hinsichtlich der Radialrichtung des Mahltellers. Auch dadurch wird eine Schränkung der Mahlwalze erreicht. Die Verdrehbarkeit der Mahlwalze kann insbesondere durch eine kreissegmentförmige Führung erreicht werden. Eine lineare Verstellung kann insbesondere durch eine Linearführung erreicht werden. Insbesondere können die Führungen als Führungsschlitze ausgeführt sein. Insbesondere kann eine Befestigung durch Reibschluss oder Formschluss mittels Schrauben erfolgen.

In einer Ausführungsform sind mehrere Mahlwalzen vorgesehen, wobei nur eine Untergruppe der Mahlwalzen geschränkt ist. Insbesondere sind alle Mahlwalzen in der Untergruppe um den Schränkwinkel in Richtung der Mahlteller-Drehrichtung verdreht. Wenn nur eine Untergruppe der Mahlwalzen geschränkt ist, so sind auch nicht geschränkte Mahlwalzen in Kontakt mit dem Mahlteller. In einer Ausführungsform können auch alle Mahlwalzen um den Schränkwinkel in Richtung der Mahlteller-Drehrichtung verdreht sein.

In einer Ausführungsform ist die Walzendrehachse parallel zur Oberfläche des Mahltellers. Insbesondere kann die Walzendrehachse orthogonal zur Drehachse des Mahltellers vorgesehen sein. Insbesondere ist die Drehachse des Mahltellers vertikal. Insbesondere ist die Walzendrehachse horizontal. Durch die Orthogonalität der Walzendrehachse zur Drehachse des Mahltellers wird erreicht, dass ausgehend von der axialen Mitte der Mahlwalze in Umfangsrichtung der Mahlwalze jeweils Schlupf bezüglich des Mahltellers auftritt. Dabei wirken Scherkräfte im radial äußeren Bereich der Mahlbahn entgegen der Drehrichtung des Mahltellers und im radial inneren Bereich der Mahlbahn in Drehrichtung des Mahltellers.

In einer alternativen Ausführungsform kann die Drehachse der Mahlwalze in einem Winkel von 0,5 Grad bis 20 Grad zur Oberfläche des Mahltellers schräggestellt sein. Insbesondere ist die Drehachse der Mahlwalze in einem Winkel von 0,5 Grad bis 10 Grad oder von 10 Grad bis 18 Grad, vorteilhafterweise von 12 Grad bis 15 Grad gegenüber der Oberfläche des Mahltellers schräggestellt. Die Schrägstellung der Drehachse kann insbesondere mit kegelig geformten Walzen kombiniert werden. Zusätzlich oder alternativ kann auch die Mahlbahn schräg gegenüber der Radialrichtung des Mahltellers ausgeführt sein. Durch die Schrägstellung der Drehachse insbesondere in Kombination mit kegeligen Walzen und/oder einer schrägen Mahlbahn kann der Schlupf, und damit die Scherkräfte, zwischen den Mahlwalzen und der Mahlbahn beeinflusst werden. Insbesondere ist es möglich, keinen Schlupf in Umfangsrichtung des Mahltellers zwischen Mahlwalze und Mahlbahn vorzusehen, sondern lediglich den durch den Schränkwinkel erzeugten Schlupf in Radialrichtung des Mahltellers. Dadurch kann in manchen Anwendungen ein besonders gleichmäßiges Mahlergebnis erreicht werden. Insbesondere ist die Drehachse der Mahlwalze so schräggestellt, dass sie ohne Schränkung einen Vektor in Radialrichtung des Mahltellers ausgehend von der Mahlbahn in der Drehachse des Mahltellers schneiden würde.

In einer Ausführungsform ist ein Schwinghebel vorgesehen, wobei der Schwinghebel um eine Lagerachse verschwenkbar gelagert ist. Die Mahlwalze ist insbesondere in dem Schwinghebel drehbar um die Walzendrehachse gelagert, wobei vorteilhafterweise die Lagerachse des Schwinghebels parallel zur Walzendrehachse ist. Somit wird ein Höhenausgleich der Mahlwalze bei unterschiedlichen Mahlgutdicken erreicht, wobei die Walzendrehachse parallel verschoben wird. Damit kann der der Mahlspalt parallel bleiben, und lediglich seine Dicke verändert werden. Somit kann ein gleichmäßiges Mahlergebnis erreicht werden.

In einer Ausführungsform ist der Schwinghebel radial außerhalb des Mahltellers in eine Konsole gelagert, die im Fundament gelagert ist. Somit können die auf die Mahlwalze wirkenden Kräfte über den Schwinghebel direkt in das Fundament abgeführt werden.

Die Erfindung stellt weiterhin ein Verfahren zum Betreiben einer Wälzmühle bereit, bei dem Mahlwalzen auf einem Mahlteller abrollen, wobei die Schlupfgeschwindigkeit in Querrichtung der Mahlwalzen über wenigstens einen Kontaktbereich in der Breite der Mahlwalzen konstant ist. Damit können eine Reduktion von Vibrationen und eine Verbesserung des Mahlergebnisses erreicht werden. Das Verfahren ermöglicht vorteilhafterweise der Bildung von Agglomeraten entgegenzuwirken. Insbesondere umfasst das Verfahren den Schritt des Bereitstellens von wenigstens einer Mahlwalze, die um einen Schränkwinkel im Bereich von 1 Grad bis 4,5 Grad in Richtung der Mahlteller-Drehrichtung verdreht ist. Vorteilhafterweise ist die Mahlwalze im Kontaktbereich mit der Mahlbahn zylindrisch geformt.

Insbesondere wird mittels der Schlupfgeschwindigkeit in Querrichtung der Mahlwalze Mahlgut in Richtung des Inneren des Mahltellers transportiert. Die Querrichtung der Mahlwalze ist die Axialrichtung der Mahlwalze. Dadurch, dass durch die Mahlwalzen Mahlgut in die Richtung des Inneren transportiert wird, wirkt der Schlupf den Zentrifugalkräften entgegen, die Mahlgut durch die Rotation des Mahltellers nach außen transportieren. Somit kann eine erhöhte Verweildauer des Mahlguts im Bereich der Mahlwalzen bei gleichzeitig hohen Mahltellerdrehgeschwindigkeiten erreicht werden, was zu einem verbesserten Mahlergebnis führt.

Schließlich stellt die Erfindung noch die Verwendung einer Wälzmühle zum Zerkleinern von partikelförmigem Schüttgut bereit, wobei durch eine Schränkung wenigstens einer Mahlwalze in Drehrichtung eines Mahltellers die Vibrationen der Wälzmühle gegenüber dem Zustand mit ungeschränkten Mahlwalzen reduziert werden. Im Stand der Technik werden bei entsprechenden Verwendungen die Vibrationen gegenüber dem ungeschränkten Zustand erhöht. Das erfindungsgemäße Verfahren und die erfindungsgemäße Verwendung ermöglichen hingegen die Reduktion von Vibrationen bei gleichbleibendem oder sogar verbessertem Mahlergebnis, insbesondere durch den Betrieb der vorangehend definierten Ausführungsformen von Wälzmühlen.

Im Folgenden wird die Erfindung anhand von beispielhaften Ausführungsformen weitergehend erläutert, die in den folgenden Figuren dargestellt sind. Dabei zeigen:
- Figur 1: eine perspektivische Ansicht einer Wälzmühle gemäß einer Ausführungsform der vorliegenden Erfindung;
- Figur 2: eine Draufsicht auf die erfindungsgemäße Ausführungsform einer Wälzmühle;
- Figur 3: eine schematische Ansicht des Mahltellers und der Mahlwalze in einer erfindungsgemäßen Ausführungsform einer Wälzmühle mit einer Darstellung der Schlupfgeschwindigkeiten in Umlaufrichtung des Mahltellers; und
- Figur 4: eine schematische Ansicht des Mahltellers und der Mahlwalze in einer erfindungsgemäßen Ausführungsform einer Wälzmühle mit einer Darstellung der Schlupfgeschwindigkeiten in Radialrichtung des Mahltellers.

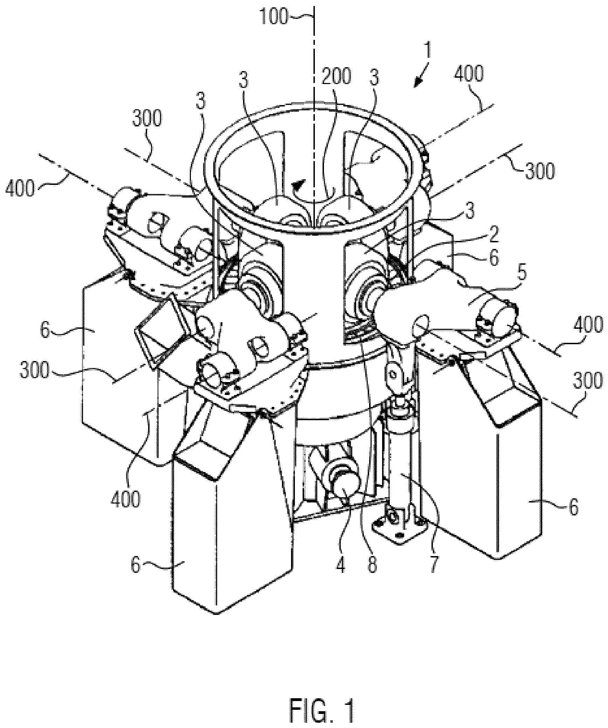

In Fig. 1 ist eine Wälzmühle gemäß einer beispielhaften Ausführungsform der Erfindung dargestellt. Die Wälzmühle weist einen Mahlteller 2 und vier Mahlwalzen 3 auf. Der Mahlteller 2 wird um seine Mittelachse 100 in einer Mahlteller-Drehrichtung 200 angetrieben. Dafür ist wenigstens ein Mahltellerantrieb 4 vorgesehen. Die Mahlwalze 3 ist um eine Walzendrehachse 300 in einem Schwinghebel 5 gelagert. Der Schwinghebel 5 ist um eine Lagerachse 400 verschwenkbar in einer Konsole 6 gelagert. Die Konsole 6 ist direkt im Fundament befestigt. Weiterhin können Hydraulikzylinder 7 vorgesehen sein, die beabstandet von der Lagerachse 400 mit dem Schwinghebel 5 verbunden sind und ausgehend vom Fundament eine Kraft auf den Schwinghebel 5 aufbringen können. Dies kann zum Ausschwenken der Mahlwalzen 3 aus dem Eingriff mit dem Mahlteller 2 dienen, oder aber zur Einstellung der Normalkraft zwischen der jeweiligen Mahlwalze 3 und dem Mahlteller 2.

Im inneren Bereich des Mahltellers 2 wird partikelförmiges Schüttgut eingebracht, das sich dann auf dem Mahlteller 2 nach radial außen bewegt, so dass es zwischen den Mahlwalzen 3 und dem Mahlteller 2 gemahlen wird. Dann wird das gemahlene Schüttgut durch einen über radial außerhalb des Mahltellers angeordneten Düsenring 8 einem Luftstrom ausgesetzt. Der Luftstrom führt das gemahlene Schüttgut einem nicht dargestellten Sichter zu, der grobe Bestandteile wieder zurück auf den Mahlteller 2 führen kann und ausreichend feine Partikel aus der Wälzmühle 1 abführt.

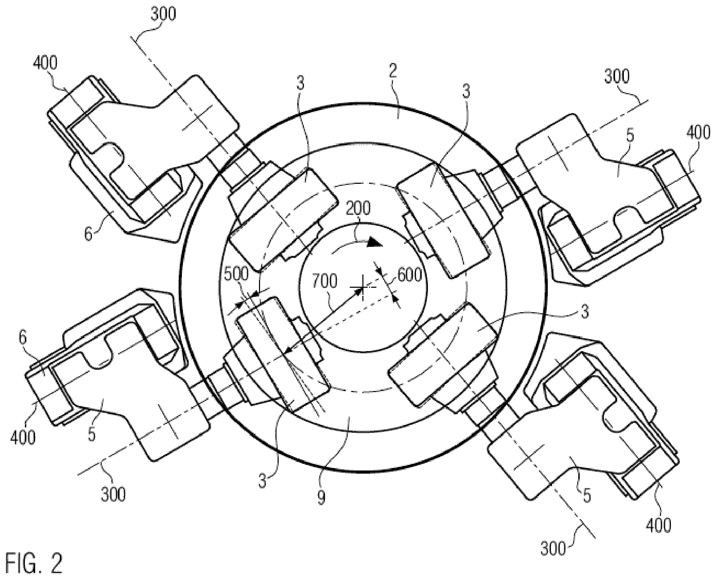

In Fig. 2 ist eine Draufsicht auf den Mahlteller 2, die Mahlwalzen 3 und deren Lagerung dargestellt. Die Mahlwalzen 3 sind in Strichlinien in ihrer ungechränkten Anordnung dargestellt, und in durchgezogenen Linien in der geschränkten Anordnung. Dabei sind die Mahlwalzen um einen Schränkwinkel 500 in Richtung der Mahlteller-Drehrichtung 200 verdreht. Dadurch verläuft die Walzendrehachse 300 in einem radialen Abstand 600 von der Mittelachse 100 des Mahltellers 2. Die Mahlwalzen 3 bilden im Bereich einer Mahlbahn 9 einen Mahlspalt, in dem mittels Normal- und Scherkräften auf dem Mahlteller 2 aufliegendes partikelförmiges Schüttgut gemahlen wird.

Die axiale Mitte der Mahlwalzen 3 ist in einem radialen Abstand 700 von der Mittelachse 100 des Mahltellers 2. Die axiale Mitte der Mahlwalze 3 definiert insbesondere auch die radiale Mitte der Mahlbahn 9. Gemäß Figur 2 wird die Schränkung durch eine Verdrehung der Mahlwalze 3 um den axialen mittleren Aufstandspunkt der Mahlwalze 3 auf dem Mahlteller 2 erreicht. Dafür kann insbesondere in der Konsole 6 eine teilkreisförmige Führung vorgesehen sein, mit der der Schwingungshebel 5 gegenüber der Konsole 6 verfahrbar ist. Alternativ oder zusätzlich kann die Schränkung durch lineares Verfahren der Mahlwalze 3, insbesondere in deren Radialrichtung erfolgen. Dadurch wird aber die Lage des axialen mittleren Aufstandspunkts der Mahlwalze 3 gegenüber dem Mahlteller 2 verändert.

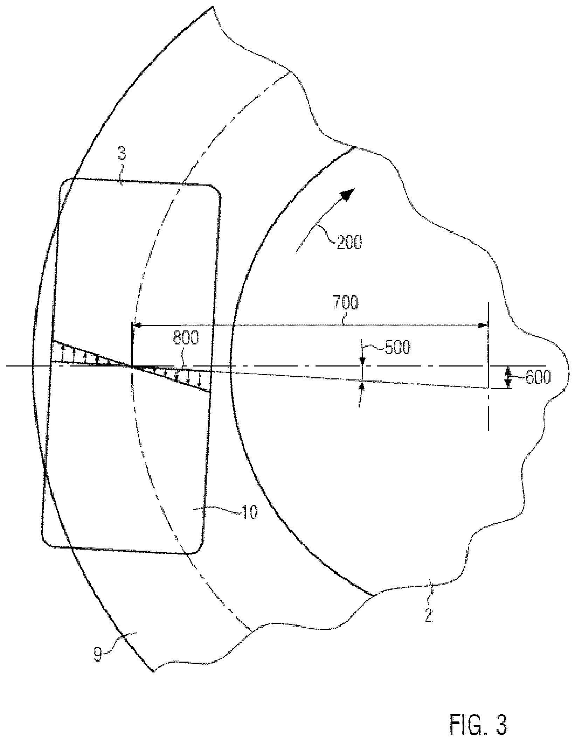

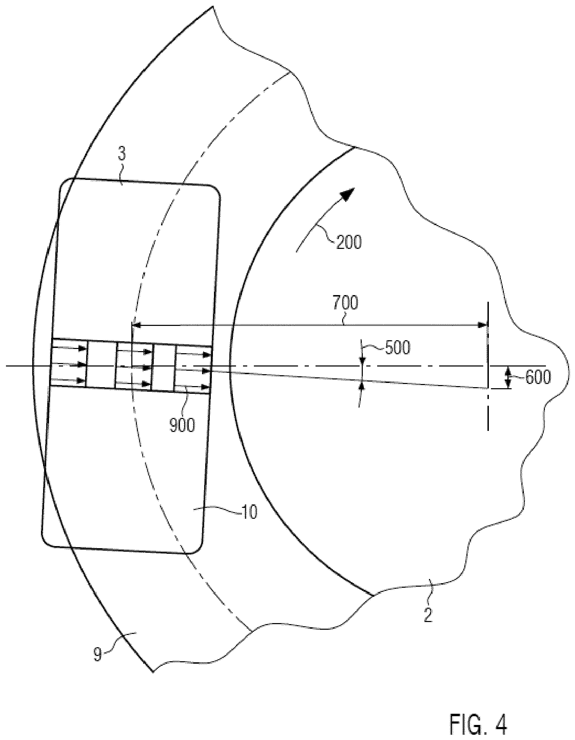

In Fig. 3 und Fig. 4 ist der Schlupf zwischen einer geschränkten Mahlwalze 3 und dem Mahlteller 2 dargestellt. Wie Fig. 3 entnommen werden kann berechnet sich die Geschwindigkeit des Mahltellers in Umfangrichtung als lineare Funktion in Abhängigkeit des Radiuses. Die Geschwindigkeit der parallel zum Mahlteller 2 und orthogonal zu dessen Mittelachse 100 gelagerten, zylindrischen Mahlwalze 3 ist hingegen gleich entlang von deren axialer Erstreckung. Folglich läuft die lediglich durch den Mahlteller 2 angetriebene Mahlwalze 3 an ihrem bezüglich des Mahltellers radial inneren Ende schneller als der entsprechende Bereich der Mahlbahn 9. In ihrem bezüglich des Mahltellers 2 radial äußeren Bereich 11 läuft die Mahlwalze 3 langsamer als der Mahlteller 2. Dadurch entsteht Schlupf zwischen der Mahlwalze 3 und dem Mahlteller 2, der jeweils zu Scherkräften führt, die dem Mahlvorgang dienlich sein können. Durch die Schränkung um den Schränkwinkel 500 in Richtung der Mahltellerdrehrichtung 200 wird gemäß der vorangehend erläuterten Geometrie und Anordnung ein konstanter Schlupf 900 in Radialrichtung des Mahltellers 2 bewirkt, wobei die Schlupfgeschwindigkeit entlang der gesamten axialen Erstreckung der Mahlwalze 3, also über den gesamten Kontaktbereich in der Breite der Mahlwalze 3, konstant ist. Dadurch werden Scherkräfte erzeugt, die in Radialrichtung des Mahltellers 2 nach innen wirken, und somit der Zentrifugalkraft entgegenwirken, die auf das mit dem Mahlteller 2 rotierende partikelförmige Schüttgut wirkt. Dies ermöglicht, dass eine verbesserte Vermahlung des Schüttguts erreicht wird, wobei insbesondere geringere Vibrationen erzeugt werden, als bei nicht erfindungsgemäß ausgestalteten Schränkungen. Durch die gleichmäßige Vermahlung kann mehr Mahlgut den Sichter passieren, wodurch der Anteil des Mahlguts, der erneut übermahlen muss, reduziert wird, sodass insgesamt eine Erhöhung der Kapazität der Wälzmühle erreicht wird.

In einer Ausführungsform des erfindungsgemäßen Verfahrens wird die vorangehend erläuterte Wälzmühle 1 durch Drehen des Mahltellers 2 betrieben, sodass die Mahlwalzen 3 darauf abrollen, wobei durch eine Schränkung der Mahlwalzen 3 eine konstante Schlupfgeschwindigkeit 900 in Querrichtung bzw. Axialrichtung der Mahlwalzen 3 erzeugt wird. Insbesondere wird mittels der Schlupfgeschwindigkeit 900 Mahlgut in Richtung des radial Inneren des Mahltellers 3 transportiert bzw. der Zentrifugalkraft bereichsweise entgegengewirkt, sodass eine bessere Mahlwirkung ermöglicht wird. Somit kann die Wälzmühle dazu verwendet werden, dass durch die Schränkung Vibrationen in der Wälzmühle reduziert werden, und gleichzeitig ein verbessertes Mahlergebnis erzeugt wird.

## Patentansprüche

1. Wälzmühle (1), mit
einem Mahlteller (2) und Mahlwalzen (3),
wobei der Mahlteller (2) relativ zu den Mahlwalzen um eine Mittelachse (100) des Mahltellers (2) in einer Mahltellerdrehrichtung (200) drehbar ist, sodass die Mahlwalzen (3) auf einer Mahlbahn (9) des Mahltellers (2) um eine Walzendrehachse (300) abrollen,
wobei wenigstens eine der Mahlwalzen (3) um einen Schränkwinkel (500) in Richtung der Mahltellerdrehrichtung (200) verdreht ist, sodass die Walzendrehachse (300) in einem radialen Abstand (600) von der Mittelachse (100) des Mahltellers (2) verläuft,
wobei der Schränkwinkel (500) zwischen 1 Grad und 4,5 Grad ist.

2. Wälzmühle gemäß Anspruch 1, wobei die Mahlwalze (3) im Kontaktbereich mit der Mahlbahn (9) zylindrisch geformt ist.

3. Wälzmühle gemäß Anspruch 1 oder 2, wobei das Verhältnis von Durchmesser der Mahlwalze (3) zu Breite der Mahlwalze 1,5 bis 6 beträgt.

4. Wälzmühle gemäß einem der vorangehenden Ansprüche, wobei das Verhältnis zwischen dem radialem Abstand von der Mittelachse (100) des Mahltellers (2) zur axialen Mitte der Mahlwalze (3) und der Breite der Mahlwalze (3) zwischen 1,5 und 6 liegt.

5. Wälzmühle gemäß einem der vorangehenden Ansprüche, wobei das Verhältnis zwischen dem radialem Abstand von der Mittelachse (100) des Mahltellers (2) zur axialen Mitte der Mahlwalze (3) und dem Durchmesser der Mahlwalze (3) zwischen 0,5 und 1,5 liegt.

6. Wälzmühle gemäß einem der vorangehenden Ansprüche, wobei die Mahlbahn (9) durch einen ebenen Bereich des Mahltellers (2) gebildet wird.

7. Wälzmühle gemäß einem der vorangehenden Ansprüche, wobei die Mahlwalze (3) um ihren axial mittleren Aufstandspunkt auf der Mahlbahn (9) verdrehbar ist.

8. Wälzmühle gemäß einem der vorangehenden Ansprüche, wobei mehrere Mahlwalzen (3) vorgesehen sind, und nur eine Untergruppe der Mahlwalzen (3) geschränkt ist.

9. Wälzmühle gemäß einem der vorangehenden Ansprüche, wobei die Walzendrehachse (300) orthogonal zur Drehachse (100) des Mahltellers (2) und/oder parallel zur Oberfläche des Mahltellers (2) ist.

10. Wälzmühle gemäß einem der vorangehenden Ansprüche, wobei die Walzendrehachse (300) in einem Winkel von 0,5 Grad bis 20 Grad zur Oberfläche des Mahltellers (2) schräggestellt ist.

11. Wälzmühle gemäß einem der vorangehenden Ansprüche, wobei ein Schwinghebel (5) vorgesehen ist, wobei der Schwinghebel (5) um eine Lagerachse (400) verschwenkbar gelagert ist, wobei die Mahlwalze (3) in dem Schwinghebel (5) drehbar um die Walzendrehachse (300) gelagert ist, und wobei die Lagerachse (400) des Schwinghebels (5) parallel zur Walzendrehachse (300) ist.

12. Wälzmühle gemäß einem der vorangehenden Ansprüche, wobei der Schwinghebel (5) radial außerhalb des Mahltellers (2) in einer Konsole (6) um die Lagerachse (400) verschwenkbar gelagert ist, wobei die Konsole (6) im Fundament gelagert ist.

13. Verfahren zum Betreiben einer Wälzmühle (1), umfassend
Abrollen von Mahlwalzen (3) auf einem Mahlteller (2), wobei die Schlupfgeschwindigkeit in Querrichtung zwischen dem Mahlteller (2) und wenigstens einer der Mahlwalzen (3) über wenigstens einen Kontaktbereich in der Breite der wenigstens einen Mahlwalze (3) konstant ist.

14. Verfahren nach Anspruch 13, wobei mittels der Schlupfgeschwindigkeit in Querrichtung der Mahlwalze Mahlgut (3) in Richtung des Inneren des Mahltellers (2) transportiert wird.

15. Verwendung einer Wälzmühle (1) zum Zerkleinern von partikelförmigen Schüttgut, wobei durch eine Schränkung wenigstens einer Mahlwalze (3) in Drehrichtung (200) eines Mahltellers, die Vibrationen der Wälzmühle (1) gegenüber dem Zustand mit ungeschränkten Mahlwalzen (3) reduziert werden.
